# EUROPEAN PATENT SPECIFICATION

(11) **EP 4 030 836 B1**
(45) Date of publication and mention of the grant of the patent: **02.07.2025**
(21) Application number: 22159562.2
(22) Date of filing: 29.01.2018
(51) Int. Cl.: H04W 68/00, H04W 36/00, H04W 88/02, H04W 88/08

(54) **METHODS AND APPARATUSES FOR PAGING IN A COMMUNICATIONS NETWORK**
PAGING-VERFAHREN UND -VORRICHTUNGEN IN EINEM KOMMUNIKATIONSNETZWERK
PROCÉDÉS ET DISPOSITIFS DE MESSAGERIE DANS UN RÉSEAU DE COMMUNICATIONS

(30) Priority: 03.02.2017 GB 201701865
(43) Date of publication of application: 20.07.2022
(62) Divisional of application: 18704627.1
(73) Proprietor: NEC Corporation, 108-8001 Tokyo (JP)
(72) Inventor: SIVAVAKEESAR, Sivapathalingham, Tokyo, 108-8001 (JP); TIETZ, Robert, Tokyo, 108-8001 (JP); LEWIS, Jonathan, Tokyo, 108-8001 (JP)
(74) Representative: Smith, Jeremy

(56) References cited:
- EP-A1- 2 930 998
- NOKIA ET AL: "Introduction of Light Connected state", vol. RAN WG3, no. Reno, USA; 20161114 - 20161118, 19 November 2016 (2016-11-19), pages 1 - 7, XP051194240, Retrieved from the Internet <URL:http://www.3gpp.org/ftp/tsg_ran/WG3_Iu/TSGR3_94/Docs/> [retrieved on 20161119]
- HUAWEI ET AL: "RAN initiated paging optimization in light connection", vol. RAN WG2, no. Dubrovnik, Croatia; 20160411 - 20160415, 1 April 2016 (2016-04-01), pages 1 - 4, XP051082037, Retrieved from the Internet <URL:http://www.3gpp.org/ftp/tsg_ran/WG2_RL2/TSGR2_93bis/Docs/> [retrieved on 20160401]
- INTEL CORPORATION: "Model B: Lightly connected UEs are in RRC_IDLE with light connection indication and ECM_IDLE using the suspend-resume proc", vol. RAN WG2, no. Reno, USA; 20161114 - 20161118, 13 November 2016 (2016-11-13), pages 1 - 12, XP051178041, Retrieved from the Internet <URL:http://www.3gpp.org/ftp/Meetings_3GPP_SYNC/RAN2/Docs/> [retrieved on 20161113]
- HUAWEI HISILICON: "On RAN initiated paging", vol. RAN WG2, no. Reno, Nevada, USA; 20161114 - 20161118, 13 November 2016 (2016-11-13), pages 1 - 5, XP051177902, Retrieved from the Internet <URL:http://www.3gpp.org/ftp/Meetings_3GPP_SYNC/RAN2/Docs/> [retrieved on 20161113]

## Description

### Technical Field

The present invention relates to a first base station and a communication device, as well as to corresponding methods. The invention has particular but not exclusive relevance to wireless communication systems and devices thereof operating according to the 3rd Generation Partnership Project (3GPP) standards or equivalents or derivatives thereof (including LTE-Advanced and Next Generation or 5G networks). The invention has particular although not exclusive relevance to paging of communication devices.

### Background Art

The latest developments of the 3GPP standards are referred to as the Long Term Evolution (LTE) of Evolved Packet Core (EPC) network and Evolved UMTS Terrestrial Radio Access Network (E-UTRAN), also commonly referred as '4G'. In addition, the term '5G' and 'new radio' (NR) refer to an evolving communication technology that is expected to support a variety of applications and services. Various details of 5G networks are described in, for example, the 'NGMN 5G White Paper' V1.0 by the Next Generation Mobile Networks (NGMN) Alliance, which document is available from https://www.ngmn.org/5g-white-paper.html. 3GPP intends to support 5G by way of the so-called 3GPP Next Generation (NextGen) radio access network (RAN) and the 3GPP NextGen core network.

Under the 3GPP standards, a NodeB (or an eNB in LTE, gNB in 5G) is the base station via which communication devices (user equipment or 'UE') connect to a core network and communicate to other communication devices or remote servers. For simplicity, the present application will use the term base station to refer to any such base stations and use the term mobile device, user device, or UE to refer to any such communication device. The core network (i.e. the EPC in case of LTE) hosts functionality for subscriber management, mobility management, charging, security, and call/session management (amongst others), and provides connection for communication devices to external networks, such as the Internet.

Communication devices might be, for example, mobile communication devices such as mobile telephones, smartphones, user equipment, personal digital assistants, laptop/ tablet computers, web browsers, e-book readers and/or the like. Such mobile (or even generally stationary) devices are typically operated by a user. However, 3GPP standards also make it possible to connect so-called 'Internet of Things' (IoT) devices (e.g. Narrow-Band IoT (NB-IoT) devices) to the network, which typically comprise automated equipment, such as various measuring equipment, telemetry equipment, monitoring systems, tracking and tracing devices, in-vehicle safety systems, vehicle maintenance systems, road sensors, digital billboards, point of sale (POS) terminals, remote control systems, and the like. Effectively, the Internet of Things is a network of devices (or "things") equipped with appropriate electronics, software, sensors, network connectivity, and/or the like, which enables these devices to collect and exchange data with each other and with other communication devices. I t will be appreciated that IoT devices are sometimes also referred to as Machine-Type Communication (MTC) communication devices or Machine-to-Machine (M2M) communication devices.

For simplicity, the present application refers to mobile devices in the description but it will be appreciated that the technology described can be implemented on any communication devices (mobile and/or generally stationary) that can connect to a communications network for sending/receiving data, regardless of whether such communication devices are controlled by human input or software instructions stored in memory.

Communication between mobile devices and base stations is controlled using a Radio Resource Control (RRC) protocol as defined in 3GPP TS 36.331 V14.1.0. RRC handles the control plane signalling of Layer 3 between mobile telephones and the radio access network, and includes, amongst other things, functions for broadcasting system information, paging, connection establishment and release, radio bearer establishment, reconfiguration and release, mobility procedures, and power control. In accordance with the current version of the RRC protocol, at any given time, a mobile device may operate either in an 'RRC idle mode' (in which no data communication takes place) or an 'RRC connected mode' (in which data communication may take place between the mobile device and its serving base station).

As mobile devices operating in the RRC connected mode move around in the area covered by the communication system, they are handed over from one cell (i.e. operated by a base station) to another cell (operated by the same or a different base station), depending on signal conditions and other requirements, such as requested quality of service, the type of service used, overall system load, and the like. Handover requires extensive signalling between the mobile device and the base stations (old and new) and also between the base stations and the core network as well.

On the other hand, whilst in the RRC idle mode, mobile devices are programmed to select a 'serving' cell, having a good quality signal, to camp on so that when new data is to be transmitted to/from these mobile devices, they can benefit from favourable signal conditions. In the event that an idle mobile device detects a new cell with better signal quality than the current serving cell, e.g. due to the mobile device changing its location, the mobile device can perform a so-called cell reselection procedure. However, an idle mode mobile device does not inform the network about the selected new cell as long as this cell is within the same 'tracking area' (i.e. a larger geographic area comprising a pre-defined set of cells), because the radio network transmits system information and UE specific paging messages within the whole tracking area thus making it possible to initiate communication to/from the mobile device regardless of the current cell it camps on.

In order to benefit from the lowest energy consumption and to free up valuable system resources, the mobile devices return to the RRC idle mode whenever possible and perform cell reselections (instead of handovers) as long as they remain within the same tracking area. The base station controls the transition between the various operating modes for each mobile device within its cell(s). Since the setting up and termination of an RRC connection between the base station and the mobile device requires exchanging of signalling messages and hence utilises valuable system resources, and also takes some time to complete, the transition from connected to idle mode is allowed under specific circumstances as defined in 3GPP TS 36.331. For example, the serving base station might instruct a mobile device to enter the RRC idle mode only after it has confirmed that there is no more data to be transmitted to/from the particular mobile device (e.g. both uplink (UL) and downlink (DL) buffers are empty).

When it registers its current location (e.g. cell) with the core network, each mobile device also has an associated 'S1' connection between its serving base station and the core network. The S1 connection is either in a so-called 'ECM-IDLE' mode (when the mobile device is in RRC idle mode) or in an 'ECM-CONNECTED' mode (when the mobile device is in RRC connected mode). The S1 connection is used for transferring data (control and user data) between the mobile device and the core network (and beyond) and it is maintained as long as the mobile device remains in the RRC connected mode. On the other hand, when a mobile device enters the RRC idle mode, its associated S1 connection is also terminated (or suspended) until the mobile device has more data to send or receive in which case a new S1 connection is established to the current serving base station (or the suspended S1 connection is re-activated).

When the network has data to send to an RRC idle mobile device, it triggers an appropriate paging procedure in the last known area (tracking/paging area) of the mobile device, which causes the base stations within that area to broadcast appropriate paging messages in their cells requesting that particular mobile device to enter the RRC connected state. When a previously idle mobile telephone has data to send again (or it has been paged for receiving downlink data), in order to be allocated communication resources it initiates a so called RRC connection establishment procedure by sending an appropriately formatted RRC connection request message to the base station (following a so-called Random Access Procedure which ensures that the lower layers, and in particular the Media Access Control (MAC) layer, are set up for communication with the base station).

For the latest developments of the 3GPP standards, the so-called Next Generation (NG) or 5G networks, it is envisaged that mobile devices may also operate in a new RRC state, or new radio state, referred to as an 'RRC inactive' state (e.g. in 5G), or a 'light-connected' (LC) state/mode (e.g. in LTE/4G). When a mobile device is in the LC state, the core network maintains both its control-plane and user-plane connection even after the mobile device has no more data to send or receive (and hence it is normally configured to enter the RRC idle mode). In other words, even though in the LC state/mode the mobile device is seen as operating in idle mode from the radio access network's (base station's) point of view, it may still be seen as being connected from the core network's point of view (even though there is no active RRC connection (i.e. SRB/DRB) between the base station and the LC or inactive state UE). One of the benefits of this new LC state/mode is that mobile devices (IoT devices in particular) that have small and infrequent data transmissions do not need to perform the entire RRC connection establishment procedure every time they have data to send (or receive). Instead, an LC state/mode capable mobile device can be configured to resume its existing RRC connection with the current serving base station whenever needed and then return to a more power efficient mode of operation until it has data to send/receive again.

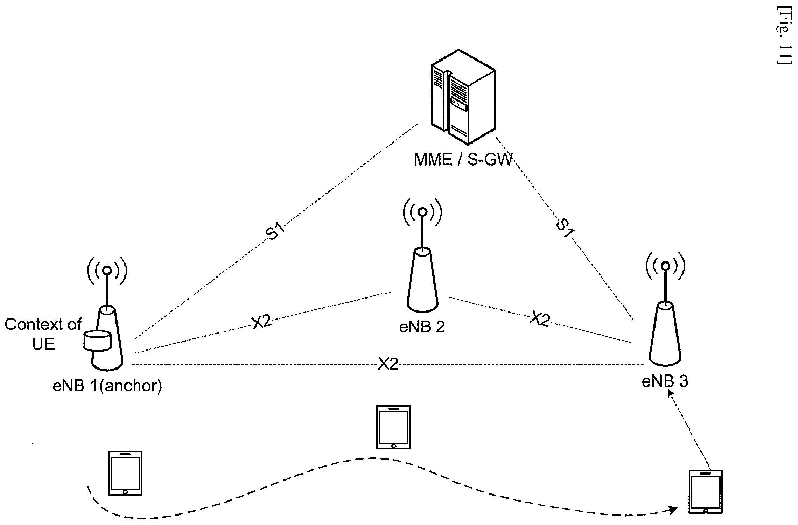

The mobile device can resume its RRC connection by sending to its current base station information (e.g. a resume ID) identifying the connection to be resumed. This beneficially avoids the base station and the mobile device having to go through authentication and radio bearer establishment. In order to facilitate such lightweight connection and simplified resumption of the connection between the mobile device and its serving base station, the concept of a so-called anchor base station is being considered by 3GPP. Effectively, the anchor base station is a base station responsible for storing UE Access Stratum (AS) context, caching the mobile device's user data (UE context) and for providing the user data to other base stations as needed while terminating S1. For example, the anchor base station may be the first (or previous) base station that the mobile device registered with in a particular tracking area (or other pre-defined area). Thus, when the mobile device attempts to resume its RRC connection via a different base station (within the same area), the new base station can contact the anchor base station and retrieve the UE context along with the cached user data based on information provided by the mobile device (e.g. resume ID and/or the like). Since in the LC state/mode the S1 connection is maintained, beneficially, the new base station can avoid having to contact the core network and/or establish a new S1 connection for the mobile device (although the new base station might need to switch the S1 connection from the anchor/previous base station to the new base station). This procedure may be referred to as anchor relocation and it involves switching an S1 terminating point from an Anchor base station to a new Serving base station whilst transferring the UE context. The anchor base station concept is illustrated in Figure 11 which is reproduced from 3GPP draft no. R3-160655.

The current agreement in 3GPP is that the base station maintains the S1 connection while the mobile device is lightly connected and the base station is responsible for RAN paging (within an appropriate paging/tracking area configured by the base station) when it receives the downlink data from core network. The LC state/mode mobile device notifies the network when it moves out of its configured RAN based paging area, in which case the network can decide whether to keep the mobile device in LC mode or suspend the mobile device (e.g. request it to enter RRC idle mode).
3GPP DRAFT R3-163123 ("Introduction of Light Connected state") discusses light connected mode being a mode where the UE can move without signalling towards the network within a RAN based paging area while the last serving eNB keeps a UE context and the UE-associated S1 connection with the serving MME.
3GPP DRAFT R2-162277 ("RAN initiated paging optimization in light connection") discusses whether the mobility impacts for a lightly connected UE could be confined to RAN level, or if the RAN could track UE in a more precise paging area than Tracking Area to reduce the paging load without increasing the paging latency.
EP 2 930 998 A1 discloses a user equipment and a method using an extended paging period to page. In the method, the MME/SGSN negotiates with a UE to obtain a first extended paging period; the MME/SGSN sends the first extended paging period and paging indication information which indicates to use the first extended paging period to page to a radio access network; the radio access network sends the first extended paging period in the system information and uses the first extended paging period to send a paging message; the UE selects a second extended paging period according to an extended paging period needed by the UE itself and the first extended paging period, and monitors the paging message according to the second extended paging period.
3GPP DRAFT R2-168441 proposes changes to lightly connected UEs in RRC_IDLE with light connection indication and ECM_IDLE using the suspend-resume procedure.
3GPP DRAFT R2-168246 discloses signalling reduction to enable light connection for LTE approved at RAN#71.

### Technical Problem

However, the inventors have realised that since the mobile device does not maintain its connection with the network while it is in inactive state or LC mode, this may cause number of issues that the currently proposed systems cannot handle. Such issues include, although they are not limited to:
- how to notify an appropriate UE specific RAN-based notification/paging area to a UE (e.g. when the paging area changes);
- how to deal with network topology changes (which might affect several UEs);
- if RAN-based paging fails, how to seek assistance (e.g. core network based paging) for reaching the UE.

Accordingly, preferred example embodiments of the present invention aim to provide methods and apparatus which address or at least partially deal with one or more of the above issues whilst still allowing mobile devices to maintain a light I RRC inactive connection with the network.

Although for efficiency of understanding for those of skill in the art, the invention will be described in detail in the context of a 3GPP system (UMTS, LTE, NR), the principles of the invention can be applied to other systems in which communication devices or User Equipment (UE) access a core network using a radio access technology.

### Summary of Invention

The present invention provides a base station, a communications device, and corresponding methods as set out in the appended claims. Optional, but advantageous features are disclosed in the appended dependent claims.

### Brief Description of Drawings

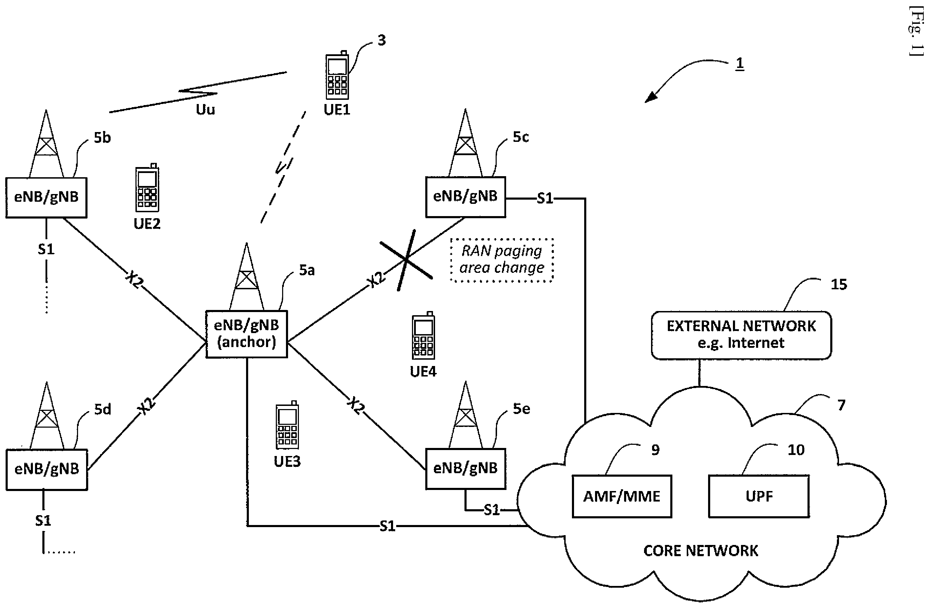

Example embodiments of the invention will now be described, by way of example, with reference to the accompanying drawings in which:
[fig. l] Figure 1 illustrates schematically a cellular telecommunication system to which example embodiments of the invention may be applied;
[fig.2] Figure 2 is a block diagram of a mobile device forming part of the system shown in Figure 1;
[fig.3] Figure 3 is a block diagram of a base station forming part of the system shown in Figure 1;
[fig.4] Figure 4 is a block diagram of a mobility management entity forming part of the system shown in Figure 1;
[fig.5] Figure 5 is a timing diagram illustrating an exemplary way in which example embodiments of the invention can be implemented in the system of Figure 1;
[fig.6] Figure 6 is a timing diagram illustrating an exemplary way in which example embodiments of the invention can be implemented in the system of Figure 1;
[fig.7] Figure 7 is a timing diagram illustrating an exemplary way in which example embodiments of the invention can be implemented in the system of Figure 1;
[fig.8] Figure 8 is a timing diagram illustrating an exemplary way in which example embodiments of the invention can be implemented in the system of Figure 1;
[fig.9]Figure 9 is a timing diagram illustrating an exemplary way in which example embodiments of the invention can be implemented in the system of Figure 1;
[fig.10]Figure 10 is a timing diagram illustrating an exemplary way in which example embodiments of the invention can be implemented in the system of Figure 1; and
[fig.11]Figure 11 illustrates schematically the anchor base station concept.

### Overview

Figure 1 schematically illustrates a telecommunications network 1 in which mobile devices 3 (such as mobile telephones, and other communication devices, including IoT devices) can communicate with each other via E-UTRAN base stations 5 and a core network 7 using an E-UTRA radio access technology (RAT). As those skilled in the art will appreciate, whilst four mobile devices 3 (denoted 'UE1' to 'UE4') and five base stations 5a to 5e are shown in Figure 1 for illustration purposes, the system, when implemented, will typically include other base stations and communication devices.

Although not shown in Figure 1, each base station 5 operates one or more associated cell (e.g. base station 5a operates a 'Cell A', base station 5b operates a 'Cell B', and so on).

Communication devices 3 can connect to an appropriate cell (depending on their location and possibly on other factors, e.g. signal conditions, subscription data, capability, and/or the like) by establishing a radio resource control (RRC) connection with the appropriate base station 5 operating that cell. As can be seen, the first mobile device 3 is located in an area where it can be served by the cells operated by the base stations 5a or 5b. Thus, when operating in RRC idle mode (not sending/receiving data), the mobile device 3 camps on the cell having the best signal quality, and when in RRC active mode, the mobile device 3 communicates data via that cell (using e.g. the 'Uu' air interface).

When the mobile device 3 first registers with the network (via one of the base stations 5), its serving base station 5 also establishes an associated S1 connection for relaying communications (user and control data) between the serving base station 5 and the core network 7.

The base stations 5 are connected to the core network 7 via an S1 interface (or NG-C/NG-U interface in case of 5G) and to each other via an X2 interface (Xn interface in 5G). The core network 7 includes, amongst others, an access and mobility management function (AMF) 9 (or a mobility management entity, MME), and a user-plane function 10 for providing a connection between the base stations 5 and external networks 15 (such as the Internet) and/or servers hosted outside the core network 7.

The AMF/MME 9 is the network node responsible for keeping track of the locations of the mobile communication devices within the communications network 1 especially when a UE is RRC_IDLE mode. In particular, the AMF/MME 9 stores an identifier of the mobile communication devices' last known cell (or tracking area) so that they can be notified when there is an incoming (voice or data) call for them and that a communication path is set up via the base station 5 currently serving the particular mobile communication device.

In the following examples, the mobile device 3 connects to the network periodically (e.g. whenever one of its applications needs to communicate with the network) for sending data to a remote endpoint (e.g. a server or another communication device). The mobile device 3 is configured to operate in a light connected (LC) mode in which the network maintains an associated S1 connection even when the mobile device 3 is operating in an inactive mode from the RAN's point of view. Therefore, between its periodic re-connections, the mobile device 3 effectively enters an idle (or 'suspended') mode and thus avoids performing handovers as long as it remains within an area configured by its anchor base station 5a.

The base station 5 serving the mobile device 3 is responsible for configuring an appropriate RAN based paging area for the mobile device 3 (e.g. by providing a list of cells and/or paging area IDs to the mobile device 3). The RAN based paging area may be configured to comprise one or more cells from the same or different base stations 5. For example, the RAN based paging area may be a tracking area, however, the RAN based paging area is UE specific and serving base station 5 may change the cells included in the RAN based paging area (when appropriate).

As illustrated by a dashed line, the mobile device 3 previously connected to the base station 5a (via Cell A) and thus the base station 5a (acting as the anchor base station for the mobile device 3) maintains an associated UE context and terminates S1. However, it will also be appreciated that the anchor base station may be a different base station, e.g. the base station 5b currently serving the mobile device 3. In the present example, the anchor base station 5a configures the mobile device 3 with a RAN paging area that includes one or more cells in the vicinity of the anchor base station 5a. For example, the (UE specific) RAN paging area may include the anchor base station's own cell(s) and the cells operated by the base stations 5b and 5c.

As illustrated by a continuous line, the mobile device 3 is now reachable via the base station 5b (e.g. via a 'Cell B' operated by that base station 5b) - for example, due to a change in signal conditions in Cell A and/or movement of the mobile device 3. In this example, the mobile device 3 currently has no active connections with the radio access network (the base stations 5), thus it is configured to perform cell reselection (without informing the network) when it moves between cells operated by the base stations 5a, 5b, and 5c. However, if the mobile device 3 moves to an area (e.g. a cell operated by base station 5d or 5e) that is not included in its RAN paging area, the mobile device 3 initiates a location update procedure in order to inform the network about its current location (in which case the mobile device 3 may be configured with a new RAN paging area).

As explained above, in LC state/mode the mobile device 3 is still seen as connected (ECM-CONNECTED) from the core network's 7 (AMF/MME 9) point of view even after the mobile device 3 has, in effect, entered an idle/inactive mode from the perspective of the base stations (and hence the mobile device 3 does not have an active data connection with its base station 5). Accordingly, when there is downlink data to send, the MME 9 does not initiate paging for the mobile device 3 in the LC state/mode (e.g. throughout an associated tracking/paging area) because the MME 9 assumes that the mobile device 3 still has an active connection with its serving base station 5 (in this example, the anchor base station 5a). Thus, the MME 9 starts sending the downlink data to the anchor base station 5a. In response to the downlink data, the anchor base station 5a starts appropriate procedures for (RAN based) paging of the mobile device 3 within the paging area appropriate for that mobile device 3.

The RAN based paging indicates to the mobile device 3 that it needs to resume its RRC connection (re-connect) via an appropriate base station for receiving downlink data. Until the mobile device 3 resumes its connection, the anchor base station 5a stores the downlink data from the AMF/MME 9 (in case of control-planes signalling or data) or from the UPF 10 (in case of user-plane data) in its cache (memory).

The base station 5a decides which cells to page when it receives the downlink data. If necessary, the anchor base station 5b may send appropriate X2/Xn paging signalling to its neighbour base station(s) in order to reach the mobile device 3 via other than its own cell(s). Thus, in this example, the anchor base station 5a performs RAN based paging in its own cell(s) and in the cells operated by the base stations 5b and 5c which are included in the (UE specific) RAN paging area for the mobile device 3. In response to receiving an appropriate paging message, the mobile device 3 is operable to resume its RRC connection via one of the base stations 5a, 5b, and 5c (depending on which cell the mobile device 3 is currently camping on) for receiving the downlink data.

In this example, the RAN paging area of the mobile device 3 changes whilst the mobile device 3 is in the LC mode. Specifically, the cell(s) operated by the base station 5c (e.g. Cell C) are being removed from the RAN paging area for the mobile device 3. This may be necessary, for example, when the X2/Xn connection between the anchor base station 5a and the base station 5c is being removed or reconfigured, or when the base station 5c is no longer able to serve the mobile device 3 (e.g. due to a cell reconfiguration, change in cell load, failure of a neighbour base station, and/or the like). In some cases, especially when the base station 5c comprises a 'home' base station (home eNB), the base station 5c may be turned off and no longer available.

However, the nodes of this system are beneficially configured to address such scenarios that necessitate a change in the associated RAN paging area for the mobile devices.

In more detail, the base stations 5 are configured to inform each other (via the X2/Xn interface) about events that may cause a change in the RAN paging area employed by other base stations. For example, such event may include a cell (or base station) becoming unavailable, a base station being powered off, an X2/Xn connection being reconfigured or removed, and/or the like.

When necessary (e.g. when being notified/triggered by a neighbour base station), each anchor base station 5 (in this example, base station 5a for UE1) is able to notify the affected mobile device(s) 3 about the change in its RAN paging area (e.g. removal of one or more cells from the currently configured RAN paging area). For example, the base stations 5 may notify the change in the paging area by transmitting updated system information and/or carry out an appropriate RAN routing area update procedure with the mobile devices 3.

Beneficially, the mobile devices 3 can be kept updated about which cells they are allowed to camp on (which cells to include in their RAN paging area) and which cells they are not allowed to camp on (which cells to exclude from their RAN paging area). The decision by an anchor base station in terms of how to configure a UE specific RAN paging area may depend on one or more of: UE history information; a handover (HO) restriction area; a service level agreement relating to the UE; UE communication pattern history; and/or the like. It will be appreciated this information may change over time, it is possible that that the base station 5 may determine an initial UE specific RAN paging area, and then, after a period of time, the base station 5 may decide to modify the number of cells in the UE specific RAN paging area and to trigger the signalling to inform the mobile device 3 of this change.

In summary, in this network it is possible to provide better service continuity and more efficient resource usage at user equipment (mobile devices and/or IoT devices), (home) base stations, and the AMF/MME when the associated RAN paging area changes for the user equipment (which may be operating in LC state/mode).

### Mobile device

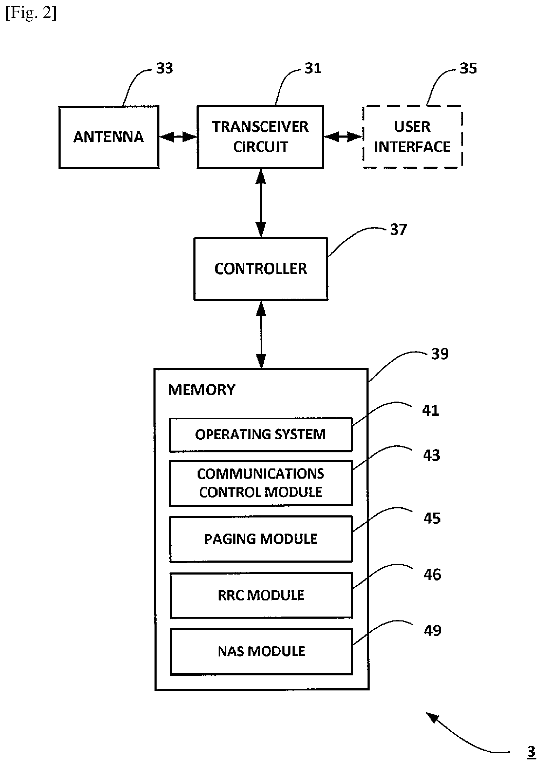

Figure 2 is a block diagram illustrating the main components of the mobile device 3 shown in Figure 1 (e.g. a mobile telephone or an IoT device). As shown, the mobile device 3 has a transceiver circuit 31 that is operable to transmit signals to and to receive signals from a base station 5 via one or more antenna 33. The mobile device 3 has a controller 37 to control the operation of the mobile device 3. The controller 37 is associated with a memory 39 and is coupled to the transceiver circuit 31. Although not necessarily required for its operation, the mobile device 3 might of course have all the usual functionality of a conventional mobile telephone (such as a user interface 35) and this may be provided by any one or any combination of hardware, software and firmware, as appropriate. Software may be pre-installed in the memory 39 and/or may be downloaded via the telecommunications network or from a removable data storage device (RMD), for example.

The controller 37 is configured to control overall operation of the mobile device 3 by, in this example, program instructions or software instructions stored within the memory 39. As shown, these software instructions include, among other things, an operating system 41, a communications control module 43, a paging module 45, an RRC module 46, and a NAS module 49.

The communications control module 43 is operable to control the communication between the mobile device 3 and its serving base station 5 (and other communication devices connected to the serving base station 5, such as other user equipment, core network nodes, etc.).

The paging module 45 is responsible for maintaining a (RAN based) paging area (e.g. in the form of a list of cells) in which the mobile device 3 can be paged, and to control the transceiver 31 to monitor for paging messages addressed to the mobile device 3. The paging module 45 is also responsible to notify the other modules (e.g. the RRC module 46 and the NAS module 49, as appropriate) when the mobile device 3 is about to leave (or when it has left) the currently configured RAN paging area (for example, in order to perform an appropriate location update procedure).

The RRC module 46 is operable to generate, send and receive signalling messages formatted according to the RRC standard. For example, such messages are exchanged between the mobile device 3 and its serving base station 5. The RRC messages may include, for example, messages relating to configuring a (RAN based) paging area for the mobile device 3.

The NAS module 49 is operable to generate, send and receive signalling messages formatted according to the NAS standard. For example, such messages are exchanged between the mobile device 3 and the MME 9 (via the serving base station 5, using the RRC module 46). The NAS messages may include, for example, messages relating to registering and/or updating a tracking area (or cell) where the mobile device 3 is currently located.

### Base Station

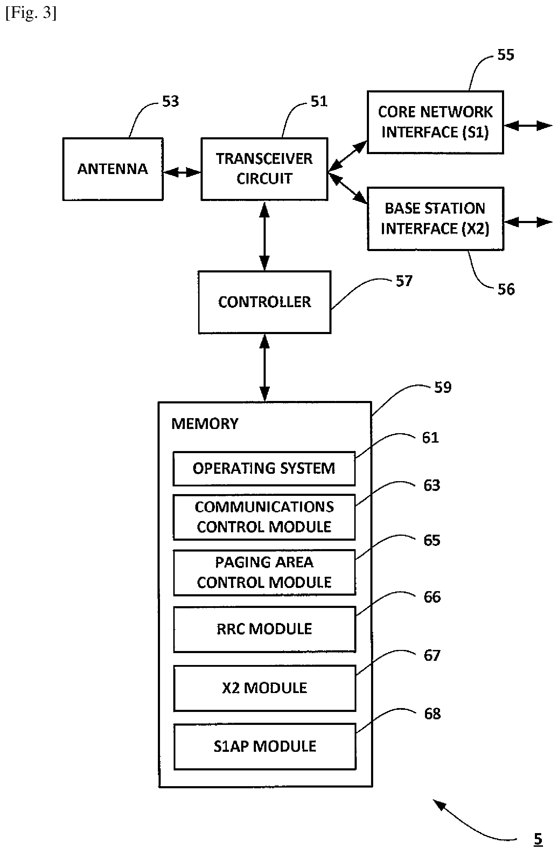

Figure 3 is a block diagram illustrating the main components of a base station 5 shown in Figure 1. As shown, the base station 5 has a transceiver circuit 51 for transmitting signals to and for receiving signals from user equipment (such as the mobile device 3) via one or more antenna 53, a core network interface 55 (e.g. an S1 interface, NG-C interface, and/or the like) for transmitting signals to and for receiving signals from the core network 7, and a base station interface 56 (e.g. an X2 interface, Xn interface, and/or the like) for transmitting signals to and for receiving signals from neighbouring base stations. The base station 5 has a controller 57 to control the operation of the base station 5. The controller 57 is associated with a memory 59. Although not necessarily shown in Figure 3, the base station 5 will of course have all the usual functionality of a cellular telephone network base station and this may be provided by any one or any combination of hardware, software and firmware, as appropriate. Software may be pre-installed in the memory 59 and/or may be downloaded via the communications network 1 or from a removable data storage device (RMD), for example. The controller 57 is configured to control the overall operation of the base station 5 by, in this example, program instructions or software instructions stored within the memory 59. As shown, these software instructions include, among other things, an operating system 61, a communications control module 63, a paging area control module 65, an RRC module 66, an X2 module 67, and an S1AP module 68.

The communications control module 63 is operable to control the communication between the base station 5 and the mobile device 3 (user equipment) and other network entities that are connected to the base station 5. The communications control module 63 also controls the separate flows of downlink user traffic (via associated data radio bearers) and control data to be transmitted to the communication devices associated with this base station 5. Control data may include, for example, control data for managing operation of the mobile device 3 (e.g. NAS, RRC, paging, system information, and/or the like).

The paging area control module 65 is responsible for maintaining, for each UE for which the base station 5 acts as an anchor, an appropriate (RAN based) paging area. The paging area control module 65 is also responsible for controlling the transceiver 51 to perform paging of mobile devices 3, when appropriate (e.g. when there is downlink data to send to a particular mobile device 3 that is not in RRC connected mode).

The RRC module 66 is operable to generate, send and receive signalling messages formatted according to the RRC standard. For example, such messages are exchanged between the base station 5 and the mobile device 3 (and other user equipment within the cell of the base station 5). The RRC messages may include, for example, messages relating to configuring a (RAN based) paging area for the mobile device 3.

The X2 module 67 is operable to generate, send and receive signalling messages (X2/Xn messages) formatted according to the X2AP (or XnAP) standard. The X2/Xn messages may include, for example, messages relating to paging a mobile device 3, data forwarding, transferring/fetching of UE context (and other information relating to the mobile device 3) between neighbouring base stations.

The S1AP module 68 is operable to generate, send and receive signalling messages formatted according to the S1AP (or NG-C) standard. For example, such messages are exchanged between the base station 5 and the AMF/MME 9. The S1AP (or NG-C) messages may include, for example, messages relating to registering the location and/ or operating state of user equipment in a cell of the base station 5, requesting paging for a particular mobile device 3, and/or associated responses.

### Access and Mobility Management Function

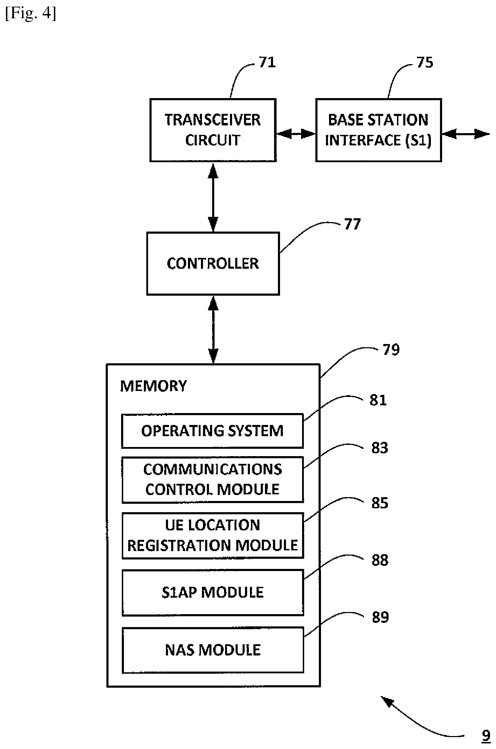

Figure 4 is a block diagram illustrating the main components of the access and mobility management function 9 (or mobility management entity) shown in Figure 1. As shown, the access and mobility management function 9 has a transceiver circuit 71 for transmitting signals to and for receiving signals from the base stations 5 (and/or communication devices 3 connected to the base stations 5) via a base station interface 75 (e.g. an S1 interface). The access and mobility management function 9 has a controller 77 to control the operation of the access and mobility management function 9. The controller 77 is associated with a memory 79. Although not necessarily shown in Figure 4, the access and mobility management function 9 will of course have all the usual functionality of a cellular telephone network access and mobility management function / mobility management entity and this may be provided by any one or any combination of hardware, software and firmware, as appropriate. Software may be pre-installed in the memory 79 and/or may be downloaded via the communications network 1 or from a removable data storage device (RMD), for example. The controller 77 is configured to control the overall operation of the access and mobility management function 9 by, in this example, program instructions or software instructions stored within the memory 79. As shown, these software instructions include, among other things, an operating system 81, a communications control module 83, a UE location registration module 85, an S1AP module 88, and a NAS module 89.

The communications control module 83 is operable to control the communication between the access and mobility management function 9 and the base stations 5, the mobile devices 3, and other network entities that are connected to the access and mobility management function 9.

The UE location registration module 85 is responsible for keeping track of current location and state (e.g. idle or connected) of user equipment connected to the access and mobility management function 9.

The S1AP module 88 is operable to generate, send and receive signalling messages formatted according to the S1AP (or NG-C) standard. For example, such messages are exchanged between the access and mobility management function 9 and connected base stations 5. The S1AP (or NG-C) messages may include, for example, messages relating to registering the location and/or operating state of user equipment in a cell of the base station 5, requesting paging for a particular mobile device 3, and/or associated responses.

The NAS module 89 is operable to generate, send and receive signalling messages formatted according to the NAS standard. For example, such messages are exchanged between the access and mobility management function 9 and the mobile device 3 (via a base station 5, using the S1AP module 88). The NAS messages may include, for example, messages relating to registering and/or updating a tracking area (or cell) where the mobile device 3 is currently located.

In the above description, the mobile device 3, the base station 5, and the access and mobility management function 9 are described for ease of understanding as having a number of discrete modules (such as the communications control modules and the RRC modules). Whilst these modules may be provided in this way for certain applications, for example where an existing system has been modified to implement the invention, in other applications, for example in systems designed with the inventive features in mind from the outset, these modules may be built into the overall operating system or code and so these modules may not be discernible as discrete entities. These modules may also be implemented in software, hardware, firmware or a mix of these.

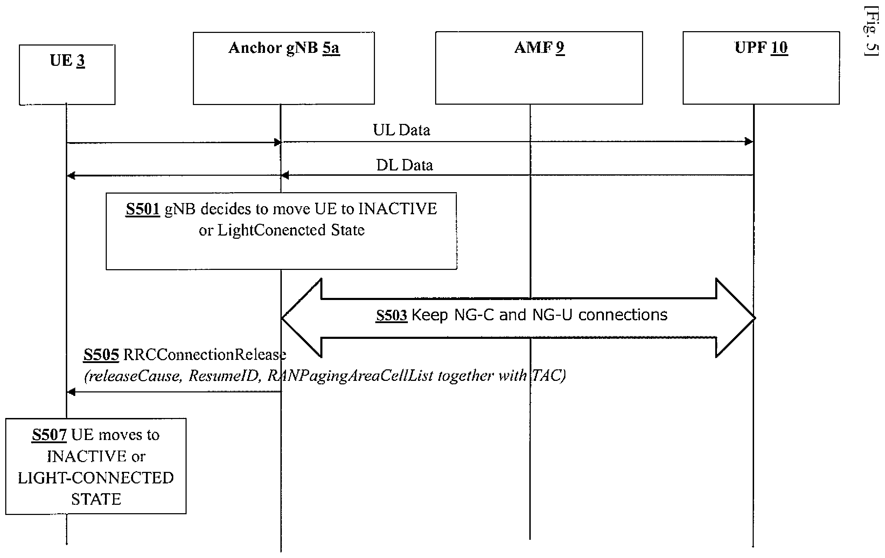

A more detailed description will now be given (with reference to Figures 5 to 10) of various ways in which a RAN based paging area can be configured for a mobile device (which may be operating in LC state/mode).

### Operation - first example

Figure 5 is a timing diagram (message sequence chart) illustrating an example process performed by components of the system 1 when performing an operation to update a paging area for a mobile device.

Initially, the mobile device 3 operates in (RRC) connected state, in which it is able to send uplink (UL) data to the UPF 10 (via the serving base station 5a) and to receive downlink (DL) data. However, in step S501, the serving (anchor) base station 5a decides to move the mobile device 3 to inactive (or LC) state, whilst maintaining the associated (S1 or NG-C/NG-U) connections towards the core network 7 (as generally shown in step S503).

It will be appreciated that the base station 5a may decide to move the mobile device 3 to the inactive (LC) state, when one or more predetermined condition is met. For example, the base station 5a may decide to move the mobile device 3 to the inactive (LC) state after the mobile device 3 has no more data to send or receive (e.g. when the downlink data buffer at the base station 5a is empty and/or when all uplink data requested for sending by the mobile device 3 has been successfully received). The base station 5a may move the mobile device 3 to the inactive (or LC) state, for example, after expiry of a timer (e.g. an inactivity timer) and/or upon request by the mobile device 3a (either explicitly or by an implicit indication, such as an indication of LC-capability).

In order to prepare the mobile device 3 for the inactive state (and to facilitate subsequent resuming of the mobile device's connection), the base station 5a stores/ updates (in its memory 59) the UE context associated with the mobile device 3 (including e.g. uplink/downlink data counters, a resume ID, security parameters, information identifying any associated S1/NG-C/NG-U bearer, information identifying a paging area, and/or the like).

Next, the base station 5a (using its RRC module 66) generates and sends, in step S505, an appropriately formatted signalling message (e.g. an RRC Connection Release message and/or the like) configuring the mobile device 3 to move to the inactive state (e.g. upon receipt of the message or after expiry of a timer) and/or suspend (release) the radio connection. The base station's 5a message optionally includes at least one of: information identifying a release cause (e.g. 'RRC-inactive' and/or the like, which may be included in an appropriately formatted information element); a resume ID. According to the claimed invention, the message includes information identifying a paging area associated with the mobile device 3, indicating a respective tracking area code, TAC (for example, a list of all cells / cell IDs that are included in the RAN based paging area with their respective tracking area codes/identifiers). It will be appreciated that the inclusion of tracking area code (TAC) may beneficially enable a mobile network operator to increase the number of unique base station/cell identifiers within a given PLMN. Further, a resume_ID in combination with a TAC can be made unique within the whole PLMN with reduced resume ID length (i.e. a Resume ID having fewer bits / smaller size can be employed whilst still being able to differentiate among a relatively large number of (inactive) mobile devices across a particular PLMN).

In step S507, the mobile device 3 changes its operation to the inactive state (light-connected state/mode) in accordance with the base station's 5a message, and stores the received information identifying the paging area (e.g. list of cells/cell IDs and associated tracking area identifiers). The mobile device 3 also stores the access stratum (AS) context, suspends all signalling radio bearers (SRBs) and data radio bearers (DRBs), and enters to light-connected / inactive state (until it has data to send or it receives signalling (paging) that it has downlink data).

Beneficially, therefore, the base station 5a is able to inform the mobile device 3 about the applicable RAN paging area as part of the procedure in which the base station 5a instructs to mobile device to change its operating state (e.g. from RRC connected to RRC inactive or light-connected state/mode). This ensures that the base station 5a and the mobile device 3 use the same list of cells for the relevant procedures (e.g. paging, location update, random access, etc.).

Therefore, in the example shown in Figure 1, the anchor base station 5a is able to notify the mobile device 3 about its appropriate RAN paging area (that does not include the cell(s) of the base station 5c). Beneficially, the mobile device 3 is now configured to camp and/or resume its connection via one of the cells (e.g. Cell B of the base station 5b) included in its current RAN paging area and avoid camping and/or resuming its connection via a cell of the base station 5c (although the mobile device 3 may still be able to establish a new connection via that base station 5c, if necessary, after performing RRC connection establishment).

It will also be appreciated that, using an appropriately formatted RRC Connection Release message, the anchor base station 5a is able to notify a respective RAN paging area to any other mobile devices (e.g. UE4) that might be affected by the change in the cell(s) of the base station 5c.

### Operation - second example

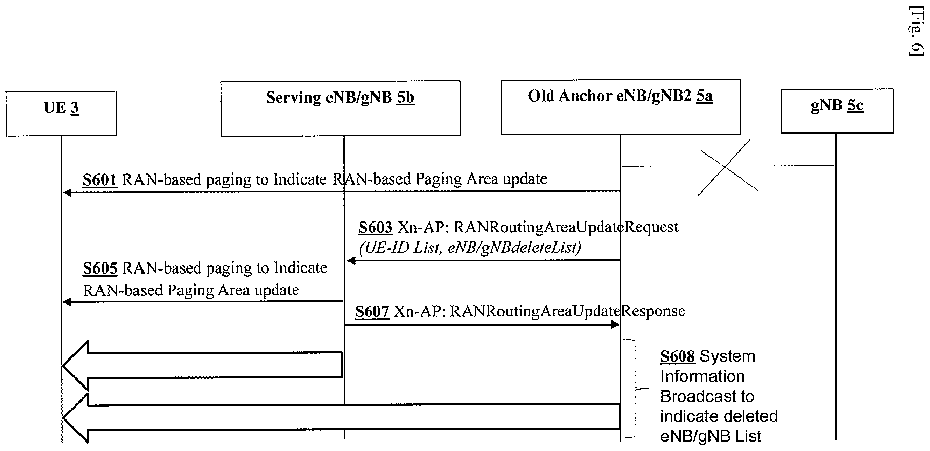

Figure 6 is a timing diagram (message sequence chart) illustrating another example process performed by components of the system 1 when performing an operation to update a paging area for a mobile device.

In this example, the mobile device 3 is initially in inactive state (e.g. following the procedure described above with reference to Figure 5) and it is camping in one of the cells of its currently configured RAN paging area. However, the anchor base station 5a is not aware of the exact cell in which the mobile device 3 is currently located (within the broader paging area).

In response to an appropriate trigger, of the anchor base station 5a is configured to notify the mobile device 3 (or a set of mobile devices) about a change in their associated RAN paging area (for example, the addition/removal of one or more cells). The trigger may include, for example, one or more of: an update of the applicable paging area and/or a cell thereof; removal/addition of an X2/Xn connection (e.g. the connection to base station 5c); an expiry of a timer measuring a validity period of a previously configured paging area; receipt of downlink data for a mobile device; a change in network (cell) configuration/load; and/or the like.

In more detail, the controller 57 of the anchor base station 5a is configured to initiate RAN based paging for the mobile device 3 (or a set of mobile devices) within the paging area that is appropriate for that mobile device 3 (within a respective paging area for each mobile device, if more than one). RAN based paging typically involves transmitting paging signalling via the air (Uu) interface, via the X2/Xn interface, or both. Therefore, as generally shown in step S601, the anchor base station 5a generates and sends appropriate paging signals (over the Uu air interface) in order to prepare the mobile device 3 to receive information about its updated RAN paging area. This paging message therefore indicates to the mobile device 3 that its associated RAN paging area is being reconfigured (rather than indicating downlink data from the core network 7).

Since the anchor base station 5a does not know whether the mobile device 3 is located in Cell A, or in another cell (of the current paging area), the anchor base station 5a also sends, in step S603, appropriate X2/Xn paging signalling to its neighbour base station(s) 5 in order to attempt to reach the mobile device 3 via neighbour cells (comprised in the current paging area for that mobile device 3).

Beneficially, the anchor base station 5a also includes in the X2/Xn message (e.g. a RAN Routing Area Update Request and/or the like) to its neighbour base station 5b information identifying one or more mobile device 3 (e.g. a list of UEs) that are being affected by the paging area change (and hence identifying the UEs that need to be paged by the neighbour base station 5b); information identifying one or more cells/ base stations that are to be added (if any); and information identifying one or more cells/base stations that are to be removed (if any). Preferably, the information identifying mobile devices may comprise an appropriately formatted information element (e.g. a 'UE-ID list' information element) and the information identifying cells/ base stations to be added and/or removed may comprise another information element (e.g. an 'eNB/gNB add list' information element and/or an 'eNB/gNB delete list' information element). Although not shown in Figure 6, the message in step S603 may also include the respective Resume IDs and/or Temporary Mobile Subscriber Identities (TMSIs) of the affected mobile devices 3.

As generally shown in step S605, the neighbour base station 5b generates and sends appropriate paging signals (over the Uu air interface) in its own cell (in this example, Cell B), as described above with reference to step S601. In step S607, the base station 5b confirms receipt of the X2/Xn message from the anchor base station 5a (step S603) by generating and sending an appropriate X2/Xn response (e.g. a RAN Routing Area Update Response and/or the like). It will be appreciated that step S607 might precede step S605, if appropriate.

After transmitting the paging signals in their respective cells, the anchor base station 5a and the neighbour base station 5b proceed to transmit information identifying the change in the RAN paging area of the mobile device(s) 3 that has been paged. In this example, as generally shown in step S608, the base stations 5a and 5b are configured to transmit information identifying cells/base stations to be removed (and/or added) via system information broadcast (SIB).

For example, the base stations 5a and 5b may transmit an appropriately formatted SIB message (e.g. a dedicated SIB message) including an information element (IE) indicating a list of cells (with their associated tracking area identifier, if applicable) to be deleted from the RAN paging area. The SIB message may be transmitted as part of a system information broadcast or unicast on demand transmission. It will be appreciated that cells to be deleted from the RAN paging area may be notified in a way analogous to the current method of notifying blacklisted cells (e.g. using SIB4).

Beneficially, by exchanging appropriate information (e.g. using RAN Routing Area Update Request on X2/Xn), the neighbour base stations are also able to take action (paging and SIB broadcast/unicast on-demand) in order to notify, in their own cell, any mobile device 3 being affected by the paging area change.

It will be appreciated that paging (steps S601 and S605) may not be necessary to notify the mobile device 3 of a paging area change. Instead, the mobile device 3 may be configured to monitor SIB transmission periodically while operating in the inactive state. This may be achieved, for example, by using an appropriate counter (e.g. changing the counter whenever the paging area changes, thereby prompting the mobile devices 3 to obtain updated paging area information from the SIB). For example, the so-called 'systemInfoValueTagSI' (defined in 3GPP TS36.331) may be used/adapted for notifying paging area changes for inactive state/mode mobile devices.

### Operation - third example

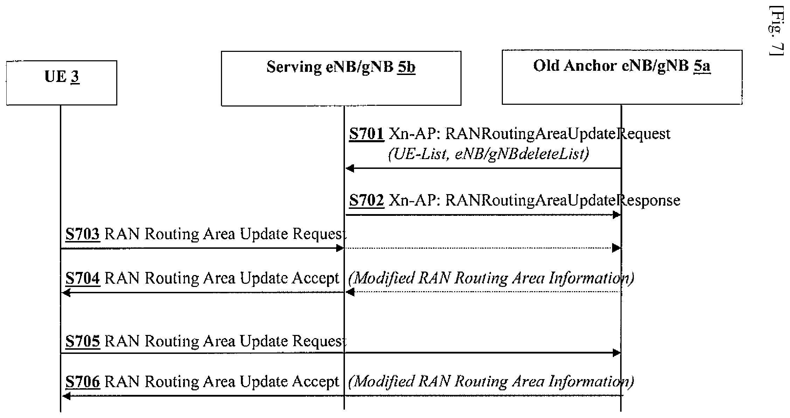

Figure 7 is a timing diagram (message sequence chart) illustrating yet another example process performed by components of the system 1 when performing an operation to update a paging area for a mobile device.

In this example, it is not necessary to perform paging in order to notify mobile devices of a paging area change. Beneficially, in this example, information relating to the associated paging area (e.g. a change thereof) may be notified periodically, for example, as part of a procedure to update a RAN routing area (and/or the like).

In more detail, a RAN routing area update procedure may be initiated by the mobile device 3, periodically (e.g. upon expiry of a timer), when it needs to perform a cell update. It will be appreciated that this is similar to the legacy tracking area update (TAU) procedure, although in this case the serving base station is configured to update the RAN paging area for the mobile device 3, as part of the RAN routing area update procedure.

In this case, therefore, the base stations 5 are configured to send, periodically, when requested by mobile devices 3 in their cells, information relating to the RAN routing area / cell in which the mobile device 3 is currently located. For example, the base stations 5 may be configured to send such information upon a periodic location update (and/or the like) initiated by the mobile devices 3. In this example, the mobile devices 3 are configured to generate and send appropriate signalling messages (e.g. a 'RAN Routing Area Update Request') to their base station 5. In order to do so, the mobile devices 3 may be configured with an appropriate timer, and request (periodic) RAN routing area updates upon expiry of the timer. It will be appreciated that this is step may be analogous to the legacy timer based TAU.

Turning now to Figure 7, steps S701 and S702 illustrate an exemplary way in which neighbouring base stations are able to exchange information identifying changes (e.g. removal) of one or more cell from the RAN paging area(s) currently being employed by the base station 5.

Steps S701 and S702 are similar to steps S603 and S607 described above with reference to Figure 6, thus some of the details are omitted herein for brevity. In this case, the anchor base station 5a detects (e.g. based on an appropriate trigger) that there is a change a RAN paging area (in this example, removal of one or more cells) employed by the base station 5a (for one or more UEs). As described above, such trigger may include, for example: an update of the applicable paging area and/or a cell thereof; removal/addition of an X2/Xn connection (e.g. the connection to base station 5c); an expiry of a timer measuring a validity period of a previously configured paging area; receipt of downlink data for a mobile device; a change in network (cell) configuration/load; and/or the like.

Therefore, in step S701, the anchor base station 5a generates and sends, to its neighbour base station 5b, an appropriately formatted X2/Xn message (e.g. a RAN Routing Area Update Request) and includes in this message information identifying one or more mobile device 3 (e.g. a list of UEs) that are being affected by the paging area change and information identifying one or more cells/base stations that are to be removed. If appropriate, the anchor base station 5a may also include information identifying one or more cells/base stations that are to be added. In this case, the information identifying one or more mobile device 3 (e.g. a list of UEs) indicates to the neighbour base station 5b which UEs need to be notified by the neighbour base station 5b (if located in the associated Cell B).

The base station stores the received information in its memory 59, and confirms receipt of the X2/Xn message from the anchor base station 5a by generating and sending, in step S702, an appropriate X2/Xn response (e.g. a RAN Routing Area Update Response and/or the like).

In this example, the mobile device 3 is currently operating in inactive state (LC state) within its currently configured RAN paging area (for example, camping on Cell A or Cell B).

If the mobile device 3 is now camping on Cell B, it generates and sends, as shown in step S703, an appropriate signalling message to the base station 5b operating that cell, sending cell update. The base station 5b (now acting as a serving base station for the mobile device 3) proceeds to check (based on information stored in its memory 59) whether there is any change in the RAN paging area and whether that particular mobile is affected (included in the list of UEs from the anchor base station 5a). Beneficially, therefore, the serving base station 5b is able to include in its response, in step S704, the information received from the anchor base station 5a (in step S701) identifying one or more cells/base stations to be removed from the RAN paging area of the mobile device 3 (if that mobile device 3 is affected). It will be appreciated that the serving base station 5b may be configured to obtain updated RAN paging area information from the anchor base station 5a (e.g. in a similar manner as in steps S701 and S702), before it responds (in step S704) to the RAN routing area update request from the mobile device 3. It will be appreciated that the updated RAN paging area information may be included in a RAN routing area update accept message (and/or the like), for example, as part of an appropriately formatted 'Modified RAN Routing Area Information' IE (and/or any other suitable IE).

Beneficially, by exchanging appropriate information (e.g. using RAN Routing Area Update Request on X2/Xn), the neighbour base stations are able to take action in order to notify, in a subsequent RAN routing area update procedure, any mobile device 3 being affected by the paging area change.

On the other hand, if the mobile device 3 is still camping on a cell operated by the anchor base station 5a (e.g. Cell A), the anchor base station 5a is able to provide the updated RAN paging area information to the mobile device 3, when it performs an appropriate (periodic) RAN routing area update. This is generally shown in steps S705 and S706 (which correspond to steps S703 and S704).

In this example, therefore, it is possible to notify the mobile device 3 about an update of its applicable RAN paging area, regardless of which cell the mobile device 3 camps on (and without requiring paging of the mobile device 3).

### Operation - fourth example

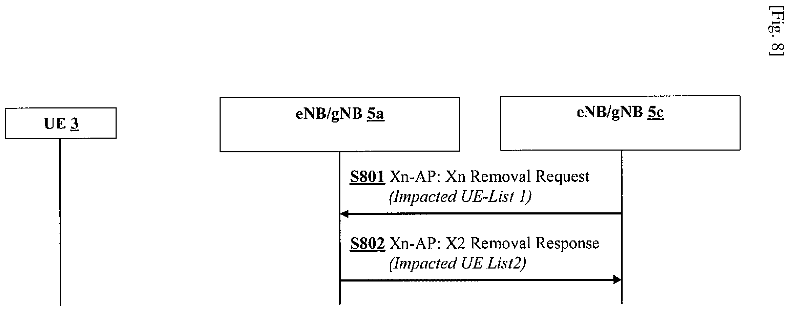

Figure 8 is a timing diagram (message sequence chart) illustrating an example process performed by components of the system 1 when performing an operation to update each other about mobile devices affected by a change of paging area.

In this example, the base stations 5 are configured to identify mobile devices 3 (e.g. for which they act as an anchor base station) that may be impacted by a change relating to that base station (or another base station connected to it). For example, in the scenario shown in Figure 1, the base station 5c may be configured to notify other base stations 5 when it is being reconfigured (or powered off, etc.) in order to allow the other base stations to update their RAN paging areas accordingly.

In more detail, when (a cell of) the base station 5c becomes unavailable for RAN based paging (e.g. due to being turned off and/or the like), the base station 5s generates and sends, in step S801, an appropriately formatted (X2/Xn) signalling message informing the other base station 5a about a set of one or more mobile devices 3 that might be affected by this change (e.g. a list of UEs for which the base station 5c is currently acting as the anchor base station). In this example, the base station 5c requests to remove the X2/Xn connection it has with the base station 5a. Therefore, preferably, the message comprises an 'Xn Removal Request' (or an 'X2 Removal Request') and includes an appropriately formatted IE comprising information (e.g. a list) identifying each (at least one) mobile device 3 that might be affected.

In response to this message, each neighbour base station (in this example, base station 5a) generates and sends, as shown in step S802, an appropriately formatted (X2/Xn) response informing the base station 5c about a set of one or more mobile devices 3 that might be affected by this change (e.g. UEs for which that particular base station 5a is currently acting as the anchor base station). In this example, the message comprises an 'Xn Removal Response' (or an 'X2 Removal Response') and also includes an appropriately formatted IE identifying (listing) the affected mobile devices 3 (for which that base station 5a is the anchor base station).

It will be appreciated that the list of impacted UEs may comprise a list of associated UE IDs suitable to identify a particular (inactive) mobile device 3, such as, for example, ResumeIDs and/or S-TMSIs (and may also be accompanied by TAC-ID List in order to ensure uniqueness).

The contents of exemplary IEs that may be used are shown in Table 1 (for the X2 Removal Request) and Table 2 (for the X2 Removal Response).

Although not shown in Figure 8, it will be appreciated that each base station 5 may proceed to perform an appropriate procedure to inform mobile devices 3 in their respective cell about the change in their associated RAN paging area. For example, the base stations 5 may perform paging for the impacted mobile devices 3 (e.g. as described above with reference to Figure 5), transmit updated system information (e.g. as described above with reference to Figure 6), and/or carry out a RAN routing area update procedure with the mobile devices 3 (e.g. as described above with reference to Figure 7). Accordingly, respective base stations are able to take corrective actions in terms of informing the mobile devices 3 in their cell(s) about any changes to the RAN paging area due to e.g. a base station to base station interface removal (X2 removal in LTE, Xn removal in 5G) (e.g. using a 'modified RAN Notification Area' IE and/or the like) before executing X2/Xn removal.

**[Table 1]**

| **IE/Group Name** | **Presence** | **Range** | **IE type and reference** | **Semantics description** | **Criticality** | **Assigned Criticality** |
|---|---|---|---|---|---|---|
| Message Type | M | | 9.2.13 | | YES | reject |
| Global eNB ID | M | | 9.2.22 | | YES | reject |
| X2 Removal Threshold | O | | X2 Benefit Value 9.2.90 | | YES | reject |
| Impacted UE List - ResumelD of UE List | | | | | | |
| *Table 1 - an exemplary IE indicating impacted UEs* | | | | | | |

**[Table 2]**

| **IE/Group Name** | **Presence** | **Range** | **IE type and reference** | **Semantics description** | **Criticality** | **Assigned Criticality** |
|---|---|---|---|---|---|---|
| Message Type | M | | 9.2.13 | | YES | reject |
| Global eNB ID | M | | 9.2.22 | | YES | reject |
| Criticality Diagnostics | O | | 9.2.7 | | YES | ignore |
| Impacted UE List - ResumelD of UE List | | | | | | |
| *Table 2 - an exemplary IE indicating impacted UEs* | | | | | | |

It will be appreciated that the respective lists of impacted UEs appearing in the X2 removal request (step S801) and the corresponding response (step S802) are likely to be different as the lists indicate impacted UEs from the perspective of the particular base station sending the message.

### Operation - fourth example

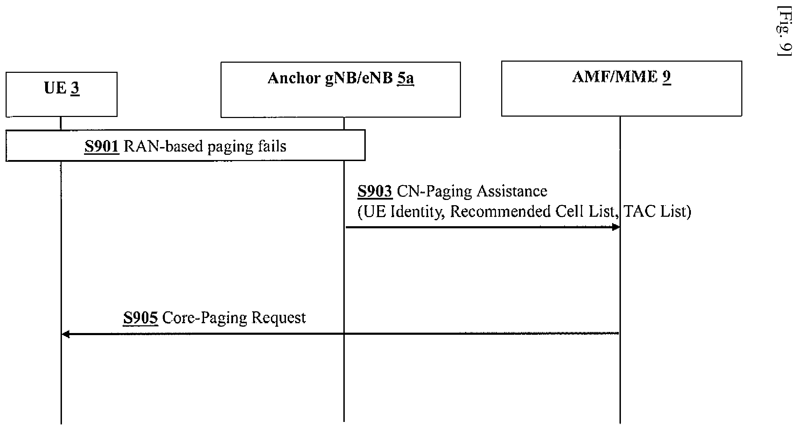

Figure 9 is a timing diagram (message sequence chart) illustrating an example process performed by components of the system 1 when performing an operation to page a mobile device with the assistance of a core network node.

In this example, the mobile device 3 does not respond to the paging by the anchor base station 5a in the RAN based paging area. Therefore, as generally shown in step S901, the anchor base station 5a determines that the RAN based paging has been unsuccessful (failed). For example, the anchor base station 5a may be configured to determine that the RAN based paging has failed if the mobile device 3 does not respond to paging messages (in any cell of the RAN paging area) within a predetermined time interval, which may be indicated by expiry of an associated timer (e.g. a paging timer).

Therefore, when it determines failure of the RAN based paging, the anchor base station 5a proceeds to requesting assistance from the core network 7 (i.e. from the AMF/MME 9). Specifically, the anchor base station 5a generates and sends, in step S903, and appropriately formatted signalling message (such as a 'CN-Paging Assistance' message and/or the like) requesting the AMF/MME 9 to initiate CN based paging procedures for the mobile device 3. The anchor base station 5a includes in this request message information identifying the mobile device 3 to be paged and information identifying one or more cells in which paging is recommended.

It will be appreciated that the cells in which paging is recommended may comprise at least a cell in which the anchor base station 5a was unable to perform RAN based paging (such as any cell operated by the base station 5c for which the associated X2/Xn connection has been removed), although it may comprise any other cell in which the mobile device 3 is likely to be located.

Optionally, the information identifying one or more cells in which paging is recommended may also include, for each cell, information identifying a respective tracking area associated with that cell. The information identifying one or more cells may comprise a list of recommended cells, for example an appropriately formatted information element (a 'Recommended Cells for Paging' IE and/or the like). Further details of the exemplary CN-Paging Assistance request and the contents of some of the information included in this request are shown in Table 3 below.

In order to assist the anchor base station 5a, the AMF/MME 9 proceeds to initiating core network based paging procedures for the mobile device 3, based on the information (e.g. recommended cell list) included in the base station's request. Therefore, the AMF/MME 9 generates (using its S1AP module 88) and sends, in step S905, an appropriately formatted paging request to the base stations 5 operating cells that are included in the recommended cell list (and/or any further cells, if appropriate). It will be appreciated that the AMF/MME 9 may also perform, either concurrently or subsequently, core network based paging procedures for the mobile device 3 over the last known tracking area for the mobile device 3.

Although not shown in Figure 9, the core network's paging request triggers the base stations 5 to carry out appropriate paging for the mobile device 3 over the cells indicated in the request (including e.g. one or more recommended cell indicated by the anchor base station 5a in step S903).

In this example, therefore, even if RAN based paging fails, e.g. due to the mobile device 3 being unable to obtain the updated paging area information, the anchor base station 5a is beneficially able to request the AMF/MME 9 to carry out a core network based paging (e.g. over a wider (tracking) area and/or over cells other than the ones currently included in the RAN paging area). Moreover, since the anchor base station 5a is aware of which cells are affected by the removal of an X2/Xn connection, it is able to assist the AMF/MME 9 to conduct an optimised paging (e.g. in a smaller area than a tracking area) when RAN-based paging fails.

### <CN-PAGING ASSISTANCE REQUEST>

This message is sent by the base station and is used to request the AMF/MME to page a UE when RAN-based paging fails.

**[Table 3]**

| **IE/Group Name** | **Presence** | **Range** | **IE type and reference** | **Semantics description** | **Criticality** | **Assigned Criticality** |
|---|---|---|---|---|---|---|
| Message Type | M | | 9.2.1.1 | | YES | ignore |
| MME UE S1AP ID | M | | 9.2.3.3 | | YES | reject |
| eNB UE S1AP ID | M | | 9.2.3.4 | | YES | reject |
| UE Identity Index value | M | | | | YES | ignore |
| UE Paging Identity | M | | | | YES | ignore |
| Recommended Cells for Paging | O | | 9.2.1.106 | | | |
| | | | | | | |
| Paging DRX | O | | | | YES | ignore |
| *Table 3 - an exemplary IE indicating cells recommended for paging a UE* | | | | | | |

### Modifications and Alternatives

Detailed embodiments have been described above. As those skilled in the art will appreciate, a number of modifications and alternatives can be made to the above embodiments whilst still benefiting from the inventions embodied therein. By way of illustration only a number of these alternatives and modifications will now be described.

It will be appreciated that embodiments of the invention may be particularly beneficial for Internet of Things (or machine-type) data transmissions (e.g. transmission of data acquired during measurement events and the like). However, it will be appreciated that the embodiments are also beneficially for transmission of any form of data depending on the application in which the communication device is being used. For example, the above embodiments may be applicable for transmitting data such as user data, backup data, synchronisation data, diagnostic data, monitoring data, usage statistics, error data and/or the like.

For simplicity, the base station 5a is described to be the anchor base station for each mobile device (UE1 to UE4) in Figure 1. However, it will be appreciated that different UEs may have different associated anchor base station (even within the same cell) and that the anchor base station for a given mobile device may change, when appropriate. In other words, more than one base station may be configured to act as anchor base station (for one or more UEs), albeit only one anchor base station is used per UE.

In Figure 1, an X2 interface is provided between two neighbouring base stations and an S1 interface is provided between each base station and the core network. However, it will be appreciated that in other systems, a different base station to base station interface and/or a different base station to core network interface may be provided. For example, in 5G systems the interface between neighbouring base stations is referred to as the 'Xn' interface and the interface between a base station and the core network is referred to as the 'NG-C' interface. IN 5G systems, base stations are referred to as gNBs.

In step S503 of Figure 5, purely for illustration purposes, the anchor base station and the core network nodes (UPF / AMF) are shown to exchange signalling in order to keep the core network connections associated with the mobile device in connected state. However, it will be appreciated that the core network nodes (UPF / AMF) may be configured to maintain the connection in the connected state even in the absence of explicit signalling from the base station (even after the mobile device stopped transmitting/receiving data). For example, the core network nodes (UPF / AMF) may be configured to maintain the associated (NG-U / NG-C) connection until expiry of a timer (after the last data transmission for that mobile device) and/or until an explicit signalling from the base station that the mobile device is idle and/or it is no longer served by this base station.

In step S505 of Figure 5, an RRC Connection Release message is sent to the mobile device, including an appropriate cause (e.g. RRC-inactive and/or the like). However, it will be appreciated that a different message may be used, for example, a specific (RRC) message for requesting inactive state (in which case an explicit cause field may not be necessary) and/or any message suitable for changing the operating/radio connection state of the mobile device. It will be appreciated that a request to move the mobile device to the inactive state may be combined with another message and/or it may be an implicit request (e.g. the mobile device may be configured to consider the presence of a resume ID and/or paging area information in any message as a request to change to the inactive state).

In the above description, the list of cells (cell IDs) that belong to a particular RAN based paging area includes the respective tracking area codes/identifiers for each cell. It will be appreciated that this allows the mobile device and the base station to uniquely identify cells across multiple tracking areas (in which the same cell IDs might be reused). However, it will be appreciated that a RAN based paging area may also be defined using a list of cell IDs only (i.e. without tracking area codes/identifiers).

It will be appreciated that the anchor base station may be configured to consider neighbour topology and/or (state of) X2/Xn connections with its neighbour base stations when determining which cells to remove form the paging area (i.e. which cells to include in the deleteCellList). For example, neighbour base station may be configured to exchange information with each other about changes in their configuration (also including changes in their X2/Xn connection to other base stations) which might require removal of a cell from the RAN paging area.

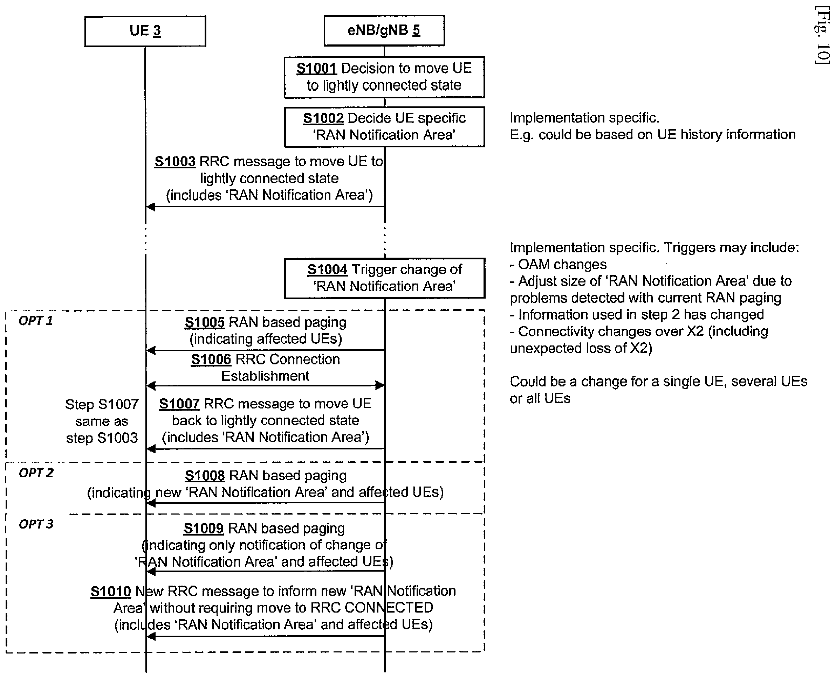

Figure 10 illustrates exemplary procedures that may be used for updating a RAN paging area associated with a particular UE (e.g. for other reasons than the ones discussed above with reference to Figure 8).

Specifically, whenever the anchor base station decides to change the RAN paging area (for a particular UE in lightly connected/RRC_INACTIVE state), it may follow one of the three options (denoted 'OPT 1', 'OPT 2', and 'OPT 3') illustrated in Figure 10 in order to update the RAN paging area associated with that UE. It will be appreciated that these procedures may also be carried out for other reasons than X2/Xn removal.

It will be appreciated that the RAN paging area may also be referred to as a RAN routing area or a RAN notification area. In some case, the RAN paging area may be a tracking area, although in most cases the RAN paging area comprises fewer cells than a tracking area.

In the above example embodiments, a 3GPP radio communications (radio access) technology is used. However, any other radio communications technology (i.e. WLAN, Wi-Fi, WiMAX, Bluetooth, etc.) can be used for managing operating states and/or notification areas for IoT devices in accordance with the above embodiments. The above example embodiments are also applicable to 'non-mobile' or generally stationary user equipment.

In the above description, the mobile device, the base station, and the MME are described for ease of understanding as having a number of discrete functional components or modules. Whilst these modules may be provided in this way for certain applications, for example where an existing system has been modified to implement the invention, in other applications, for example in systems designed with the inventive features in mind from the outset, these modules may be built into the overall operating system or code and so these modules may not be discernible as discrete entities.

In the above example embodiments, a number of software modules were described. As those skilled in the art will appreciate, the software modules may be provided in compiled or un-compiled form and may be supplied to the base station, to the mobility management entity, to the mobile/IoT device, or to other user equipment as a signal over a computer network, or on a recording medium. Further, the functionality performed by part or all of this software may be performed using one or more dedicated hardware circuits. However, the use of software modules is preferred as it facilitates the updating of the base station, the mobility management entity, or the mobile device in order to update their functionalities.

It will be appreciated that the controllers referred to in the description of the mobile/ IoT device, the base station, and the mobility management entity (i.e. with reference to Figures 2 to 4) may comprise any suitable controller such as, for example an analogue or digital controller. Each controller may comprise any suitable form of processing circuitry including (but not limited to), for example: one or more hardware implemented computer processors; microprocessors; central processing units (CPUs); arithmetic logic units (ALUs); input/output (IO) circuits; internal memories / caches (program and/or data); processing registers; communication buses (e.g. control, data and/or address buses); direct memory access (DMA) functions; hardware or software implemented counters, pointers and/or timers; and/or the like.

In one example described above, a method performed by a base station of a communications network comprises: sending, to a communication device, a message indicating that a paging area for the communication device is to be updated at the communication device; and broadcasting system information comprising information identifying a change to the paging area.

When the base station operates as an anchor base station for the communication device, the method further comprises sending to another base station or multiple base stations (e.g. that operates a cell of the paging area) a message comprising information identifying a change to the paging area. When the base station operates a cell of the paging area, the method further may comprise receiving from another base station (e.g. an anchor base station) a message comprising information identifying a change to the paging area. The method may further comprise of sending a message to the anchor base station responsive to the message comprising information identifying a change to the paging area (e.g. after sending the message comprising information identifying a change to the paging area).

The change to the paging area may comprise removal of at least one base station (and/or an associated cell) from the paging area, in which case the system information may comprise a list of at least one base station (and/or an associated cell) to be deleted from the paging area.

In another example described above, a method performed by a base station of a communications network comprises: receiving, from a communication device, a request message to request update of a routing area; and sending, to a communication device, responsive to the request message, a message comprising information identifying a change to the routing area.

When the base station operates as an anchor base station for the communication device, the method may further comprise sending to another base station or multiple base stations (e.g. that operates a cell of the paging area) a message comprising information identifying a change to the routing area. When the base station operates a cell of the routing area, the method may further comprise receiving from another base station (e.g. an anchor base station) a message comprising information identifying a change to the routing area. In this case, the method may further comprise of sending a message to the anchor base station responsive to the message comprising information identifying a change to the routing area.

In another example described above, a method performed by a base station of a communications network comprises: receiving, from another base station, a request message to request removal of a base station to base station interface between base stations operating cells of a paging area; and sending, to the another base station, responsive to the request message, a response message comprising information identifying a change to the paging area; wherein at least one of the request message, and the response message, includes information identifying at least one communication device that will be impacted by the removal. In this example, both the request message and the response message may include respective information identifying at least one communication device that will be impacted by the removal.

In another example described above, a method performed by a communication device of a communications network comprises: receiving, from a base station, a message indicating that a paging area for the communication device is to be updated at the communication device; and receiving system information broadcast comprising information identifying a change to the paging area.

The change to the paging area may comprise removal of at least one base station (and/or an associated cell or cells) from the paging area, in which case the system information may comprise a list of at least one base station (and/or an associated cell or cells) to be deleted from the paging area.

In another example described above, a method performed by a communication device of a communications network comprises: transmitting, to a base station, a request message to request update of a routing area; receiving, from the base station, responsive to the request message, a message comprising information identifying a change to the routing area.

In another example described above, a method performed by a base station of a communications network comprises: determining that a communication device is to be moved to an inactive or light connected (LC) mode/state; and sending, to the communication device, a message indicating that the communication device is to move to the inactive or light connected (LC) mode/state; wherein, the message includes information identifying at least one cell that forms a paging area for the communication device. In this example, the message may comprise a radio resource control (RRC) connection release message. The RRC connection release message may include information identifying a release cause (e.g. release cause = rrc-inactive). The information identifying at least one cell may comprise a cell list (e.g. a RANPagingArea-CellList), for example, a list of cells together with respective associated tracking area codes (TAC).

The base station may operate as an anchor base station for the communication device whilst the communication device is in the light connected (LC) mode/state.

In another example described above, a method is performed by a base station acting as an anchor base station for a communication device of a communications network. The method comprises: determining that a paging attempt for the communication device has failed; and sending, to a core network entity, responsive to said determining, a request message to request the core network entity to page the communication device; wherein the request message includes information identifying at least one cell recommended for paging.

In another example described above, a method performed by a core network entity of a communications network comprises: receiving, from a base station acting as an anchor base station for a communication device, responsive to the base station determining that a paging attempt for the communication device has failed, a request message to request the core network entity to page the communication device; wherein the request message includes information identifying at least one cell recommended for paging. In this example, the method may further comprise paging the communication device based on the information identifying at least one cell recommended for paging e.g. based on the RAN Paging Area list assigned to a communication device whilst in the light connected (LC) mode/state.

Whilst specific hardware apparatus having a specific physical structure (e.g. controllers and transceiver circuitry) have been disclosed for performing the various procedures described herein, each step of the methods disclosed in the description and/or forming part of the claims, may be implemented by any suitable means for performing that step. In accordance with this each method aspect of the invention has a corresponding apparatus aspect comprising respective means for performing each step of that method aspect.

Various other modifications will be apparent to those skilled in the art and will not be described in further detail here.

This application is based upon and claims the benefit of priority from United Kingdom patent application No. 1701965.6, filed on February 3, 2017.

## Claims

1. A method performed by a first base station (5a) of a communication network, the method comprising:
transmitting, to a communication device (3), a Radio Resource Control, RRC, message requesting the communication device (3) to move to an RRC inactive state, the RRC message including first information identifying a first Radio Access Network, RAN, based paging area indicating a respective tracking area code, TAC; and
transmitting, to a second base station (5b), a paging message including second information indicating whether the first RAN based paging area is changed, and third information identifying a second RAN based paging area, and wherein
paging information is transmitted from the second base station (5b) to the communication device (3) on a cell in the second RAN based paging area.

2. The method according to claim 1, wherein the RRC message includes an RRC release message.

3. The method according to claim 1 or 2, further comprising operating as an anchor base station for the communication device (3).

4. A first base station (5a) of a communications network, the base station (5a) comprising:
means for transmitting, to a communication device (3), a Radio Resource Control, RRC, message requesting the communication device (3) to move to an RRC inactive state, the RRC message including first information identifying a first Radio Access Network, RAN, based paging area indicating a respective tracking area code, TAC; and
transmit, to a second base station (5b), a paging message including second information indicating whether the first RAN based paging area is changed, and third information identifying a second RAN based paging area, and wherein
paging information is transmitted from the second base station (5b) to the communication device (3) on a cell in the second RAN based paging area.

5. A method performed by a communication device (3), the method comprising:
Receiving, from a first base station (5a), a Radio Resource Control, RRC, message requesting the communication device (3) to move to an RRC inactive state, the RRC message including first information identifying a first Radio Access Network, RAN, based paging area indicating a respective tracking area code, TAC; and
receiving paging information from a second base station (5b) in a cell in a second RAN based paging area, after a paging message is transmitted from the first base station (5a) to the second base station (5b), the paging message including second information indicating whether the first RAN based paging area is changed, and third information identifying the second RAN based paging area.

6. A communication device (3), comprising:
means for receiving, from a first base station (5a), a Radio Resource Control, RRC, message requesting the communication device (3) to move to an RRC inactive state, the RRC message including first information identifying a first Radio Access Network, RAN, based paging area indicating a respective tracking area code, TAC; and
means for receiving paging information from a second base station (5b) in a cell in a second RAN based paging area, after a paging message is transmitted from the first base station (5a) to the second base station (5b), the paging message including second information indicating whether the first RAN based paging area is changed, and third information identifying the second RAN based paging area.

## Patentansprüche

1. Verfahren, das durch eine erste Basisstation (5a) eines Kommunikationsnetzwerks ausgeführt wird, wobei das Verfahren aufweist:
Übertragen einer RRC-, Funkressourcensteuerung, Nachricht, an ein Kommunikationsgerät (3), wobei die RRC-Nachricht das Kommunikationsgerät (3) auffordert, in einen RRC-Inaktiv-Zustand überzugehen, wobei die RRC-Nachricht erste Information enthält, die einen ersten RAN-, Funkzugangsnetzwerk, basierten Paging-Bereich identifiziert, der einen entsprechenden Tracking Area Code, TAC, anzeigt; und
Übertragen einer Paging-Nachricht, die zweite Information enthält, die anzeigt, ob der erste RAN-basierte Paging-Bereich geändert wurde, und dritte Information, die einen zweiten RAN-basierten Paging-Bereich identifiziert, an eine zweite Basisstation (5b), und wobei
Paging-Information von der zweiten Basisstation (5b) an das Kommunikationsgerät (3) in einer Zelle im zweiten RAN-basierten Paging-Bereich übertragen wird.

2. Verfahren nach Anspruch 1, wobei die RRC-Nachricht eine RRC-Freigabenachricht enthält.

3. Verfahren nach Anspruch 1 oder 2, ferner mit dem Betreiben als eine Anker-Basisstation für das Kommunikationsgerät (3).

4. Erste Basisstation (5a) eines Kommunikationsnetzwerks, wobei die Basisstation (5a) aufweist:
eine Einrichtung zum Übertragen einer RRC-, Funkressourcensteuerung, Nachricht, an ein Kommunikationsgerät (3), wobei die RRC-Nachricht das Kommunikationsgerät (3) auffordert, in einen RRC-Inaktiv-Zustand überzugehen, wobei die RRC-Nachricht erste Information enthält, die einen ersten RAN-, Funkzugangsnetzwerk, basierten Paging-Bereich identifiziert, der einen entsprechenden Tracking Area Code, TAC, anzeigt; und
Übertragen einer Paging-Nachricht, die zweite Information enthält, die anzeigt, ob der erste RAN-basierte Paging-Bereich geändert wurde, und dritte Information, die einen zweiten RAN-basierten Paging-Bereich identifiziert, an eine zweite Basisstation (5b), und wobei
Paging-Information von der zweiten Basisstation (5b) an das Kommunikationsgerät (3) in einer Zelle im zweiten RAN-basierten Paging-Bereich übertragen wird.

5. Verfahren, das durch ein Kommunikationsgerät (3) ausgeführt wird, wobei das Verfahren aufweist:
Empfangen einer RRC-, Funkressourcensteuerung, Nachricht von einer ersten Basisstation (5a), wobei die RRC-Nachricht das Kommunikationsgerät (3) auffordert, in einen RRC-Inaktiv-Zustand überzugehen, wobei die RRC-Nachricht erste Information enthält, die einen ersten RAN-, Funkzugangsnetzwerk, basierten Paging-Bereich identifiziert, der einen entsprechenden Tracking Area Code, TAC, anzeigt; und
Empfangen von Paging-Information von einer zweiten Basisstation (5b) in einer Zelle in einem zweiten RAN-basierten Paging-Bereich, nachdem eine Paging-Nachricht von der ersten Basisstation (5a) an die zweite Basisstation (5b) übertragen wurde, wobei die Paging-Nachricht zweite Information enthält, die anzeigt, ob der erste RAN-basierte Paging-Bereich geändert wurde, und dritte Information, die den zweiten RAN-basierten Paging-Bereich identifiziert.

6. Kommunikationsgerät (3), mit:
einer Einrichtung zum Empfangen einer RRC-, Funkressourcensteuerung, Nachricht von einer ersten Basisstation (5a), wobei die RRC-Nachricht das Kommunikationsgerät (3) auffordert, in einen RRC-Inaktiv-Zustand überzugehen, wobei die RRC-Nachricht erste Information enthält, die einen ersten RAN-, Funkzugangsnetzwerk, basierten Paging-Bereich identifiziert, der einen entsprechenden Tracking Area Code, TAC, anzeigt; und
einer Einrichtung zum Empfangen von Paging-Information von einer zweiten Basisstation (5b) in einer Zelle in einem zweiten RAN-basierten Paging-Bereich, nachdem eine Paging-Nachricht von der ersten Basisstation (5a) an die zweite Basisstation (5b) übertragen wurde, wobei die Paging-Nachricht zweite Information enthält, die anzeigt, ob der erste RAN-basierte Paging-Bereich geändert wurde, und dritte Information, die den zweiten RAN-basierten Paging-Bereich identifiziert.

## Revendications

1. Procédé réalisé par une première station de base (5a) d'un réseau de communication, le procédé comportant :
la transmission, à un dispositif de communication (3), d'un message de commande de ressources radio, RRC, demandant au dispositif de communication (3) de passer à un état RRC inactif, le message RRC incluant de premières informations identifiant une première zone de radiomessagerie basée sur un réseau d'accès radio, RAN, indiquant un code de zone de suivi, TAC, respectif ; et
la transmission, à une deuxième station de base (5b), d'un message de radiomessagerie incluant de deuxièmes informations indiquant si la première zone de radiomessagerie basée sur un RAN est modifiée, et de troisièmes informations identifiant une deuxième zone de radiomessagerie basée sur un RAN, et dans lequel
des informations de radiomessagerie sont transmises de la deuxième station de base (5b) au dispositif de communication (3) sur une cellule dans la deuxième zone de radiomessagerie basée sur un RAN.

2. Procédé selon la revendication 1, dans lequel le message RRC inclut un message de libération RRC.

3. Procédé selon la revendication 1 ou 2, comportant en outre le fonctionnement en tant que station de base d'ancrage pour le dispositif de communication (3).

4. Première station de base (5a) d'un réseau de communication, la station de base (5a) comportant :
des moyens de transmission, à un dispositif de communication (3), d'un message de commande de ressources radio, RRC, demandant au dispositif de communication (3) de passer à un état RRC inactif, le message RRC incluant de premières informations identifiant une première zone de radiomessagerie basée sur un réseau d'accès radio, RAN, indiquant un code de zone de suivi, TAC, respectif ; et
la transmission, à une deuxième station de base (5b), d'un message de radiomessagerie incluant de deuxièmes informations indiquant si la première zone de radiomessagerie basée sur un RAN est modifiée, et de troisièmes informations identifiant une deuxième zone de radiomessagerie basée sur un RAN, et dans laquelle
des informations de radiomessagerie sont transmises de la deuxième station de base (5b) au dispositif de communication (3) sur une cellule dans la deuxième zone de radiomessagerie basée sur un RAN.

5. Procédé réalisé par un dispositif de communication (3), le procédé comportant :
la réception, en provenance d'une première station de base (5a), d'un message de commande de ressources radio, RRC, demandant au dispositif de communication (3) de passer à un état RRC inactif, le message RRC incluant de premières informations identifiant une première zone de radiomessagerie basée sur un réseau d'accès radio, RAN, indiquant un code de zone de suivi, TAC, respectif ; et
la réception d'informations de radiomessagerie en provenance d'une deuxième station de base (5b) dans une cellule dans une deuxième zone de radiomessagerie basée sur un RAN, après la transmission d'un message de radiomessagerie de la première station de base (5a) à la deuxième station de base (5b), le message de radiomessagerie incluant de deuxièmes informations indiquant si la première zone de radiomessagerie basée sur un RAN est modifiée, et de troisièmes informations identifiant la deuxième zone de radiomessagerie basée sur un RAN.

6. Dispositif de communication (3), comportant :
des moyens de réception, en provenance d'une première station de base (5a), d'un message de commande de ressources radio, RRC, demandant au dispositif de communication (3) de passer à un état RRC inactif, le message RRC incluant de premières informations identifiant une première zone de radiomessagerie basée sur un réseau d'accès radio, RAN, indiquant un code de zone de suivi, TAC, respectif ; et
des moyens de réception d'informations de radiomessagerie en provenance d'une deuxième station de base (5b) dans une cellule dans une deuxième zone de radiomessagerie basée sur un RAN, après la transmission d'un message de radiomessagerie de la première station de base (5a) à la deuxième station de base (5b), le message de radiomessagerie incluant de deuxièmes informations indiquant si la première zone de radiomessagerie basée sur un RAN est modifiée, et de troisièmes informations identifiant la deuxième zone de radiomessagerie basée sur un RAN.
